(19) Europäisches Patentamt
European Patent Office
Office européen des brevets

(11) EP 4 469 401 B1

(12) **EUROPEAN PATENT SPECIFICATION**

(45) Date of publication and mention of the grant of the patent:
**13.08.2025 Bulletin 2025/33**

(21) Application number: **23700840.4**

(22) Date of filing: **16.01.2023**

(51) International Patent Classification (IPC):
***C01G 53/00*** (2025.01) ***H01M 4/04*** (2006.01)
***H01M 4/1391*** (2010.01) ***H01M 4/36*** (2006.01)
***H01M 4/525*** (2010.01) ***H01M 4/62*** (2006.01)
***H01M 10/0525*** (2010.01)

(52) Cooperative Patent Classification (CPC):
**C01G 53/82; C01G 53/42; C01G 53/50; H01M 4/0471; H01M 4/131; H01M 4/1391; H01M 4/366; H01M 4/485; H01M 4/505; H01M 4/525; H01M 4/62; H01M 4/625; H01M 10/0525;** C01P 2002/52; C01P 2004/61;
(Cont.)

(86) International application number:
**PCT/EP2023/050794**

(87) International publication number:
**WO 2023/139003 (27.07.2023 Gazette 2023/30)**

(54) **PROCESS FOR MANUFACTURE OF COATED ELECTRODE ACTIVE MATERIALS FOR LITHIUM ION BATTERIES, AND COATED ELECTRODE ACTIVE MATERIALS**

VERFAHREN ZUR HERSTELLUNG VON BESCHICHTETEN ELEKTRODENAKTIVMATERIALIEN FÜR LITHIUMIONENBATTERIEN UND BESCHICHTETE ELEKTRODENAKTIVMATERIALIEN

PROCÉDÉ DE FABRICATION DE MATÉRIAUX ACTIFS D'ÉLECTRODES ENROBÉES POUR BATTERIES LITHIUM-ION ET MATÉRIAUX ACTIFS D'ÉLECTRODES ENROBÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.01.2022 EP 22152854**

(43) Date of publication of application:
**04.12.2024 Bulletin 2024/49**

(73) Proprietor: **BASF SE**
**67056 Ludwigshafen am Rhein (DE)**

(72) Inventors:
- **TAKEUCHI, Ryosuke**
**Osaka, Osaka 545-0021 (JP)**
- **MICHEL, Kathrin**
**67056 Ludwigshafen (DE)**

(74) Representative: **BASF IP Association**
**BASF SE**
**GBI - Z078**
**67056 Ludwigshafen (DE)**

(56) References cited:
**EP-A1- 3 902 037**
**WO-A1-2021/001293**
**WO-A1-2021/110692**
**KR-A- 20110 063 335**
**US-A1- 2019 123 347**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C01P 2004/84; H01M 2004/028; Y02E 60/10

## Description

The present invention is directed towards a process for the manufacture of coated cathode active materials comprising the steps of

(a) providing a particulate electrode active material based on a lithiated oxide according to general formula $Li_{1+x}TM_{1-x}O_2$ and x is in the range of from zero to 0.2 and wherein TM is a combination of metals according to general formula (I),

$$(Ni_aCo_bMn_c)_{1-d}M_d \qquad (I)$$

with

a being in the range of from 0.6 to 0.99,
b being zero or in the range of from 0.01 to 0.2,
c being in the range of from zero to 0.2, and
d being in the range of from zero to 0.1,
M is at least one of Al, Mg, Ti, Mo, W and Zr, and

$$a + b + c = 1,$$

(b) treating said particulate electrode active material with water, and subsequently removing the majority of the water by a solid-liquid separation method, thereby obtaining a solid residue,
(c) treating the solid residue from step (b) with a source of boron and with at least one compound of Mg, Ca, Sr, Ba, and Zn selected from the respective sulfates, oxides and hydroxides, thereby obtaining an intermediate,
(d) treating the intermediate obtained from step (c) thermally.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.
Currently, a certain interest in so-called Ni-rich electrode active materials may be observed, for example electrode active materials that contain 75 mole-% or more of Ni, referring to the total TM content.
One problem of lithium ion batteries - especially of Ni-rich electrode active materials - is attributed to undesired reactions on the surface of the electrode active materials. Such reactions may be a decomposition of the electrolyte or the solvent or both. It has thus been tried to protect the surface without hindering the lithium exchange during charging and discharging. Examples are attempts to coat the electrode active materials with, e.g., aluminium oxide or calcium oxide, see, e.g., US 8,993,051.
Document EP 3 902 037 A1 discloses a cathode active material comprising a core of lithium transition metal oxide and a coating layer of glassy boron oxide.
Other theories assign undesired reactions to free LiOH or $Li_2CO_3$ on the surface. Attempts have been made to remove such free LiOH or $Li_2CO_3$ by washing the electrode active material with water, see, e.g., JP 4,789,066 B, JP 5,139,024 B, and US2015/0372300. However, in some instances it was observed that the properties of the resultant electrode active materials did not improve.
It was an objective of the present invention to provide a process for making Ni-rich electrode active materials with excellent electrochemical properties. It was also an objective to provide Ni-rich electrode active materials with excellent electrochemical properties, especially a low resistance growth upon cycling.
Accordingly, the process defined at the outset has been found, hereinafter also referred to as "inventive process". The inventive process comprises the following steps:

(a) providing a particulate electrode active material based on a lithiated oxide according to general formula $Li_{1+x}TM_{1-x}O_2$ and x is in the range of from zero to 0.2 and wherein TM is a combination of metals according to general formula (I),

$$(Ni_aCo_bMn_c)_{1-d}M_d \qquad (I)$$

with

a being in the range of from 0.6 to 0.99,
b being zero or in the range of from 0.01 to 0.2,
c being in the range of from zero to 0.2, and
d being in the range of from zero to 0.1,
M is at least one of Al, Mg, Ti, Mo, W and Zr, and

$$a + b + c = 1,$$

(b) treating said particulate electrode active material with water, and subsequently removing the majority of the water by a solid-liquid separation method, thereby obtaining a solid residue,
(c) treating the solid residue from step (b) with a source of boron and with at least one compound of Mg, Ca, Sr, Ba, and Zn selected from the respective sulfates, oxides and hydroxides, thereby obtaining an intermediate,
(d) treating the intermediate obtained from step (c) thermally.

The inventive process comprises at least four steps, (a), (b), (c), and (d), in the context of the present invention also referred to as step (a) and step (b) and step (c) and step (d), respectively. Steps (a) to (d) are performed subsequently.

In step (a), the inventive process starts off from an electrode active material based on a lithiated oxide of TM wherein TM is a combination of metals and wherein TM contains Ni and at least one of Co and Mn, preferably TM contains Co and Al or Co and Mn and, optionally, Al. Said material is hereinafter also referred to as starting material. Preferably, said electrode active material is a lithiated oxide of TM. Said lithiated oxide of TM may contain impurities stemming from its manufacture, for example residual lithium hydroxide, residual lithium carbonate and/or lithium sulfate, each less than 1% by weight, preferably less than 0.5 % by weight.

In one embodiment of the present invention, said particulate electrode active material provided in step (a) is a material according to general formula $Li_{1+x}TM_{1-x}O_2$, wherein TM comprises Ni and, at least one transition metal selected from Co and Mn, and, optionally, at least one element selected from Al and Mg-%, and x is in the range of from zero to 0.2. Preferably, at least 75 mole-% of TM is Ni.

In one embodiment of the present invention the starting material has an average particle diameter (D50) in the range of from 3 to 20 μm, preferably from 4 to 16 μm. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the starting material has a specific surface (BET), hereinafter also referred to as "BET surface", in the range of from 0.1 to 2.0 $m^2/g$. The BET surface may be determined by nitrogen adsorption after outgassing of the sample at 200°C for 30 minutes or more and beyond this accordance with DIN ISO 9277:2010.

In one embodiment of the present invention, the particulate material provided in step (a) has a moisture content in the range of from 20 to 2,000 ppm, determined by Karl-Fischer titration, preferred are 50 to 1,200 ppm.

In one embodiment of the present invention, the variable TM corresponds to general formula (I)

$$(Ni_aCo_bMn_c)_{1-d}M^1_d \qquad (I)$$

with a + b + c = 1 and

a being in the range of from 0.6 to 0.99, preferably from 0.75 to 0.95, more preferably from 0.85 to 0.95,

b being zero or in the range of from 0.01 to 0.2, preferably from 0.025 to 0.2, more preferably from 0.025 to 0.1,

c being in the range of from zero to 0.2, preferably from 0.025 to 0.2, more preferably from 0.05 to 0.1,

d being in the range of from zero to 0.1, preferably from zero to 0.04,

$M^1$ is at least one of Al, Mg, Ti, Nb, Mo, W and Zr, preferably at least one of Al, Ti, Zr and W.

In one embodiment of the present invention, the variable c is zero, $M^1$ is Al, and d is in the range of from 0.01 to 0.05.

In another embodiment of the present invention, the variable TM corresponds to general formula (I a)

$$(Ni_{a*}Co_{b*}Al_{e*})_{1-d*}M^2_{d*} \quad (I\ a)$$

with a* + b* + c* = 1 and

a* being in the range of from 0.75 to 0.95, preferably from 0.88 to 0.95,

b* being in the range of from 0.025 to 0.2, preferably from 0.025 to 0.1,

e* being in the range of from 0.01 to 0.2, preferably from 0.015 to 0.04,

d* being in the range of from zero to 0.1, preferably from zero to 0.02,

$M^2$ is at least one of W, Mo, Nb, Mg, Ti or Zr.

The variable x in formula (I a) is in the range of from zero to 0.2, preferably from 0.01 to 0.1.

In one embodiment of the present invention TM corresponds to general formula (I) and x is in the range from zero to 0.2, preferably from zero to 0.1 and even more preferably 0.01 to 0.05.

In one embodiment of the present invention, TM is selected from $Ni_{0.6}Co_{0.2}Mn_{0.2}$, $Ni_{0.7}Co_{0.2}Mn_{0.1}$, $Ni_{0.8}Co_{0.1}Mn_{0.1}$, $Ni_{0.83}Co_{0.12}Mn_{0.05}$, $Ni_{0.89}Co_{0.055}Al_{0.055}$,$Ni_{0.91}Co_{0.045}Al_{0.045}$ and $Ni_{0.85}Co_{0.1}Mn_{0.05}$.

The electrode active material provided in step (a) is usually free from conductive carbon, that means that the conductive carbon content of starting material is less than 1% by weight, referring to said starting material, preferably 0.001 to 1.0 % by weight.

Some elements are ubiquitous. In the context of the present invention, traces of ubiquitous metals such as sodium, calcium, iron or zinc, as impurities will not be taken into account in the description of the present invention. Traces in this context will mean amounts of 0.02 mol-% or less, referring to the total metal content of the starting material.

Traces of sulfate stemming from the synthesis of particulate electrode active material will be neglected as well.

In step (b), said electrode active material provided in step (a) is treated with water. It is observed that in the course of step (b), the pH value of the water raises to at least 10, for example 11 to 13.

It is preferred that the water hardness of said aqueous medium used in step (b) is at least partially removed, especially calcium. The use of desalinized water is preferred.

one embodiment of the present invention, step (b) is performed at a temperature in the range of from 5 to 85°C, preferred are 10 to 60°C.

In one embodiment of the present invention, step (b) is performed at normal pressure. It is preferred, though, to perform step (b) under elevated pressure, for example at 10 mbar to 10 bar above normal pressure, or with suction, for example 50 to 250 mbar below normal pressure, preferably 100 to 200 mbar below normal pressure.

Step (b) may be performed, for example, in a vessel that can be easily discharged, for example due to its location above a filter device. Such vessel may be charged with starting material followed by introduction of aqueous medium. In another embodiment, such vessel is charged with aqueous medium followed by introduction of starting material. In another embodiment, starting material and aqueous medium are introduced simultaneously.

In one embodiment of the present invention, in step (b), the amounts of water and electrode active material have a weight ratio in the range of from 1:5 to 5:1, preferably from 2:1 to 1:2.

Step (b) may be supported by mixing operations, for example shaking or in particular by stirring or shearing, see below.

In one embodiment of the present invention, the treatment in step (b) has a duration in the range of from 1 minute to 90 minutes, preferably 1 minute to less than 60 minutes. A duration of 5 minutes or more is possible in embodiments wherein in step (b), water treatment and water removal are performed overlapping or simultaneously.

In one embodiment of the present invention, treatment according to step (b) and water removal are performed consecutively.

After or during the treatment with an aqueous medium in accordance to step (b), water may be removed by any type of filtration, for example on a band filter or in a filter press.

In one embodiment of the present invention, at the latest 5 minutes after commencement of step (b), water removal is started. Step (c) includes partially removing the water from treated particulate material, for example by way of a solid-liquid separation, for example by decanting or preferably by filtration. Said "partial removal" may also be referred to as partially separating off.

In one embodiment of step (c), the slurry obtained in step (b) is discharged directly into a centrifuge, for example a decanter centrifuge or a filter centrifuge, or on a filter device, for example a suction filter or in a filter press or in a belt filter

that is located preferably directly below the vessel in which step (b) is performed. Then, filtration is commenced.

In a particularly preferred embodiment of the present invention, steps (b) and (c) are performed in a filter press or in a filter device with stirrer, for example a pressure filter with stirrer or a suction filter with stirrer (German for example: "Rahrfilternutsche"). At most 5 minutes after, preferably at most 3 minutes after - or even immediately after - having combined starting material and aqueous medium in accordance with step (b), removal of aqueous medium is commenced by starting the filtration. On laboratory scale, steps (b) and (c) may be performed on a Büchner funnel, and steps (b) and (c) may be supported by manual stirring.

In a preferred embodiment, step (b) is performed in a filter device, for example a stirred filter device that allows stirring of the slurry in the filter or of the filter cake.

In one embodiment of the present invention, the water removal in accordance to step (c) has a duration in the range of from 1 minute to 1 hour.

In one embodiment of the present invention, stirring in step (b) is performed with a rate in the range of from 1 to 50 revolutions per minute ("rpm"), preferred are 5 to 20 rpm. In other embodiments, it is 200 to 400 rpm.

In one embodiment of the present invention, filter media may be selected from ceramics, sintered glass, sintered metals, organic polymer films, non-wovens, and fabrics.

In one embodiment of the present invention, step (b) is carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., optical methods using infrared light. It is even more preferred to perform steps (b) and (c) under an atmosphere with a carbon dioxide content below detection limit for example with infrared-light based optical methods.

From step (b), a solid residue is obtained, preferably in the form of a wet filter cake. The moisture content of the solid residue and especially of the filter cake may be in the range of from 3 to 20 % by weight, preferably 4 to 9 % by weight.

In step (c), the solid residue from step (b) is treated with a source of boron, for example boric acid or $B_2O_3$ or $LiBO_2$, and with at least one compound of Mg, Ca, Sr, Ba, and Zn, said metals also being referred to as $M^3$, preferred are Sr and Zn, said compounds being selected from the respective sulfates, oxides and hydroxides, thereby obtaining an intermediate. Of said compounds of Mg, Ca, Sr, Ba, and Zn, compounds that are soluble in aqueous acidic solution, for example at a pH value in the range of from 2 to 5, are preferred. $BaSO_4$ and $SrSO_4$ may be selected but are not preferred.

Step (c) may be performed in the presence of a solvent, for example an alcohol like ethanol or isopropanol, or water. Preferably, step (c) is performed in the absence of a solvent.

In one embodiment of the present invention, said compound(s) of Mg, Ca, Sr, Ba, and Zn are selected from MgO, $Mg(OH)_2$, $MgSO_4$, SrO, $Sr(OH)_2$, BaO, $Ba(OH)_2$, ZnO, $ZnSO_4$, and $Zn(OH)_2$. Preferably, said compound(s) of Mg, Ca, Sr, Ba, and Zn are selected from MgO, $Mg(OH)_2$, SrO, $Sr(OH)_2$, BaO, $Ba(OH)_2$, ZnO, $ZnSO_4$, and $Zn(OH)_2$. More preferred are the oxides MgO, CaO, SrO, and ZnO.

In one embodiment of the present invention, the molar ratio of boron to compound(s) of Mg, Ca, Sr, Ba, and Zn is in the range of from 10:1 to 1:10, preferably 6:1 to 1:2.

In one embodiment of step (c), compound(s) of $M^3$ is in total be used in the range of from 0.1 to 5.0 mol-%, referring to TM, preferred are 0.2 to 1.0 mol-%.

In one embodiment of step (c), source of B is used in the range of from 0.1 to 3.0 mol-%, referring to B and to TM, preferred are 0.2 to 1.0 mol-%.

The treatment according to step (c) may be performed in one or more sub-steps, for example with compound of Mg, Ca, Sr, Ba, or Zn in a first sub-step and with a source of boron in the second sub-step, or with source of boron in a first sub-step and with compound of Mg, Ca, Sr, Ba, or Zn in the second sub-step. It is preferred, though, to only perform one treatment step.

In one embodiment of the present invention, steps (b) to (c) are performed in the same vessel, for example in a filter device with stirrer, for example a pressure filter with stirrer or a suction filter with stirrer. In other embodiments, step (c) is carried out in a blender. Example of blenders are plough-share mixers as commercially available from Lödige GmbH, high-shear mixers and crushers of the "wonder blender" type as manufactured by Osaka Chem. Co., Ltd. In other embodiments, step (c) is carried out in a blender, for example a lab blender or a horizontal or vertical mixer capable of applying shear through an additionally placed set of blades.

In one embodiment of the present invention, step (c) is carried out at a temperature in the range of from 5 to 75°C, preferred are 10 to 35°C.

In one embodiment of the present invention, step (c) has a duration in the range of from 5 minutes to 5 hours. Longer treatment times usually do not have any benefit.

Said treatment according to step (c) yields a material.

The inventive process includes a subsequent step (d):

(d) thermal treatment of the material obtained from step (c).

Said step (d) is particularly preferred in embodiments wherein said compound(s) of $M^3$ or B are added as aqueous slurry or aqueous solution.

Step (d) may be carried out in any type of oven, for example a roller hearth kiln, a pusher kiln, a rotary kiln, a pendulum kiln, or - for laboratory scale trials - in a muffle oven.

The temperature of the thermal treatment according to step (d) may be in the range of from 40 to 650°C, preferably 150 to 400°C. Said temperature refers to the maximum temperature of step (d).

It is possible to subject the material obtained from step (d) directly to step (d) or to remove water by a solid-liquid separation method such as filtration.

It is preferred to increase the temperature in step (d) stepwise, or to ramp up the temperature, or to dry the material obtained after step (d) at first at a temperature in the range of from 40 to 250°C, sub-step (e1), before subjecting it to sub-step (e2), for example at above 250 to 650°C.

Said step-wise increase or ramping up may be performed under normal pressure or reduced pressure, for example 0.1 ("vacuum") to 500 mbar.

Step (d) - at its maximum temperature - may be performed under normal pressure.

In one embodiment of the present invention, step (d) is carried out under an oxygen-containing atmosphere, for example air, oxygen-enriched air or pure oxygen.

In embodiments wherein a drying at a temperature in the range of from 40 to 250°C prior to step (d) is performed such drying may be performed with a duration of from 10 minutes to 20 hours.

In one embodiment of the present invention, step (d) is carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., optical methods using infrared light. It is even more preferred to perform step (d) under an atmosphere with a carbon dioxide content below detection limit for example with infrared-light based optical methods.

In one embodiment of the present invention step (d) has a duration in the range of from 1 to 10 hours, preferably 90 minutes to 6 hours.

In one embodiment of the present invention, the lithium content of an electrode active material is reduced by 0.04 to 1% by weight, preferably 0.05 to 0.5%. Said reduction mainly affects the so-called residual lithium, and the percentage refers to the total lithium content of the starting material.

By carrying out the inventive process, electrode active materials are obtained with excellent electrochemical properties. Without wishing to be bound by any theory, we assume that the decomposition products of compounds of B may lead to scavenging lithium compounds deposited at the surface of the electrode active material, and that the compound of $M^3$ leads to a glass formation.

Without wishing to be bound by any theory, we assume that the surface of the electrode active material is less negatively influenced by the inventive process than by washing processes without B and compound of $M^3$ addition.

Cathode active materials obtained by the inventive process have numerous advantages. Cathodes made from such cathode active materials display improved cycling stability, reduced gassing and reduced electrolyte decomposition upon cycling. It may be shown by, e.g., transmission electron spectroscopy ("TEM"), a coating of the secondary particles occurs.

Another aspect of the present invention relates to electrode active materials, hereinafter also related to inventive electrode active materials or inventive cathode active materials. Inventive cathode active materials may be obtained by the inventive process.

Inventive cathode active materials are particulate electrode active material for a lithium ion battery wherein said material has a core based on a lithiated oxide according to general formula $Li_{1+x}TM_{1-x}O_2$ wherein TM is a combination of metals, vide supra, and an at least partial coating based on a compound of boron and at least one compound of Mg, Ca, Sr, Ba, and Zn, hereinafter also referred to as $M^3$.

Fore example, such coating may comprise compounds like $B_2O_3$ or Li-B-oxides that may contain $M^3$, or sulfate or oxide of $M^3$.

In one embodiment of the present invention, said coating has a thickness in the range of from 1 to 15 nm, determined by SEM (scanning electron microscopy) or TEM.

An at least partial coating includes embodiments wherein all particles of inventive cathode active material are coated. However, in one embodiment, 80 to 99.9 % of all particles of inventive cathode active material are coated and 0.1 to 20% are not, preferably, 90 to 99.9% are coated.

An at least partial coating includes embodiments wherein all particles of inventive cathode active material are completely coated. However, in one embodiment, in the range of from 1 to 20% of the outer surface of the particles of inventive cathode active material may be non-coated. Without wishing to be bound by any theory, it is possible that by certain inhomogeneities of the surface of particles after step (b), for example hydroxyl content or others, the coating is enhanced.

In one embodiment of the present invention, inventive cathode active material has an average particle diameter (D50) in the range of from 3 to 20 $\mu$m, preferably from 4 to 16 $\mu$m. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, inventive cathode active material has a specific surface (BET), hereinafter also referred to as "BET surface", in the range of from 0.1 to 2.0 $m^2/g$. The BET surface may be determined by nitrogen adsorption after outgassing of the sample at 200°C for 30 minutes or more and beyond this accordance with DIN ISO 9277:2010.

In one embodiment of the present invention, inventive cathode active has a moisture content in the range of from 20 to 2,000 ppm, determined by Karl-Fischer titration, preferred are 50 to 1,200 ppm.

In one embodiment of the present invention, x is in the range of from zero to 0.16, preferably zero up to 0.05.

TM in formula $Li_{1+x}TM_{1-x}O_2$ is a combination of metals according to general formula (I a)

$$(Ni_aCo_bMn_c)_{1-d}M_d \qquad \text{(I a)}$$

with

a being in the range of from 0.6 to 0.99,
b being zero or in the range of from 0.01 to 0.2,
c being in the range of from zero to 0.2, and
d being in the range of from zero to 0.1,
M is at least one of Al, Mg, Ti, Mo, W and Zr, and

$$a + b + c = 1,$$

and x is in the range of from zero to 0.05.

In another embodiment of the present invention, the variable TM corresponds to general formula (I a)

$$(Ni_{a*}Co_{b*}Al_{e*})_{1-d*}M^2_{d*} \qquad \text{(I a)}$$

with a* + b* + c* = 1 and
a* being in the range of from 0.75 to 0.95, preferably from 0.88 to 0.95,
b* being in the range of from 0.025 to 0.2, preferably from 0.025 to 0.1,
e* being in the range of from 0.01 to 0.2, preferably from 0.015 to 0.04,
d* being in the range of from zero to 0.1, preferably from zero to 0.02,
$M^2$ is at least one of W, Mo, Nb, Mg, Ti or Zr.

The variable x in formula (I a) is in the range of from zero to 0.2, preferably from 0.01 to 0.1.

In one embodiment of the present invention TM corresponds to general formula (I) and x is in the range from zero to 0.2, preferably from zero to 0.1 and even more preferably 0.01 to 0.05.

In one embodiment of the present invention, TM is selected from $Ni_{0.6}Co_{0.2}Mn_{0.2}$, $Ni_{0.7}Co_{0.2}Mn_{0.1}$, $Ni_{0.8}Co_{0.1}Mn_{0.1}$, $Ni_{0.83}Co_{0.12}Mn_{0.05}$, $Ni_{0.89}Co_{0.055}Al_{0.055}$, $Ni_{0.91}Co_{0.045}Al_{0.045}$ and $Ni_{0.85}Co_{0.1}Mn_{0.05}$.

Inventive electrode active material is usually free from conductive carbon, that means that the conductive carbon content of starting material is less than 1% by weight, referring to said starting material, preferably 0.001 to 0.1 % by weight.

Some elements are ubiquitous. In the context of the present invention, traces of ubiquitous metals such as sodium, calcium, iron or zinc, as impurities will not be taken into account in the description of the present invention. Traces in this context will mean amounts of 0.02 mol-% or less, referring to the total metal content of the starting material.

In one embodiment of the present invention, inventive cathode active materials have a particle diameter distribution span in the range of from 0.5 to 0.9, the span being defined as [(D90) - (D10)] divided by (D50), all being determined by LASER analysis. In another embodiment of the present invention, said precursor may have a particle diameter distribution span in the range of from 1.1 to 1.8.

In one embodiment of the present invention, said at least partial coating is predominantly located at the outer surface of the secondary particles.

In one embodiment of the present invention, said at least partial coating is glassy or amorphous. Preferably, said coating contains a glassy or amorphous oxide of lithium and boron.

A further aspect of the present invention refers to electrodes comprising at least one particulate cathode active material according to the present invention. They are particularly useful for lithium ion batteries. Lithium ion batteries comprising at least one electrode according to the present invention exhibit a good cycling behavior/stability. Electrodes comprising at least one particulate cathode active material according to the present invention are hereinafter also referred to as inventive cathodes or cathodes according to the present invention.

Specifically, inventive cathodes contain

(A) at least one inventive cathode active material,
(B) carbon in electrically conductive form,
(C) a binder material, also referred to as binders or as binders (C), and, preferably,
(D) a current collector.

In a preferred embodiment, inventive cathodes contain

(A) 80 to 98 % by weight inventive cathode active material,
(B) 1 to 17 % by weight of carbon,
(C) 1 to 15 % by weight of binder,

percentages referring to the sum of (A), (B) and (C).

Cathodes according to the present invention can comprise further components. They can comprise a current collector, such as, but not limited to, an aluminum foil. They can further comprise conductive carbon and a binder.

Cathodes according to the present invention contain carbon in electrically conductive modification, in brief also referred to as carbon (B). Carbon (B) can be selected from soot, active carbon, carbon nanotubes, graphene, and graphite, and from combinations of at least two of the foregoing.

Suitable binders (C) are preferably selected from organic (co)polymers. Suitable (co)polymers, i.e., homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol-% of copolymerized ethylene and up to 50 mo-l% of at least one further comonomer, for example $\alpha$-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol-% of copolymerized propylene and up to 50 mol-% of at least one further comonomer, for example ethylene and $\alpha$-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and $\alpha$-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight $M_w$ in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co) polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to inventive cathode active material. In other embodiments, inventive cathodes may comprise 0.1 up to less than 1% by weight of binder(s).

A further aspect of the present invention is a battery, containing at least one cathode comprising inventive cathode active material, carbon, and binder, at least one anode, and at least one electrolyte.

Embodiments of inventive cathodes have been described above in detail.

Said anode may contain at least one anode active material, such as carbon (graphite), $TiO_2$, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol-% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (II) and (III)

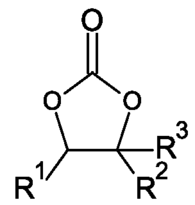

(II)

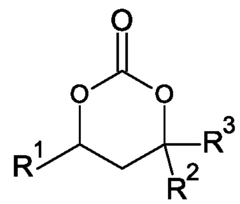

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (IV).

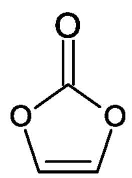

(IV)

The solvent or solvents is/are preferably used in the water-free state, i.e. with a water content in the range from 1 ppm to 0.1% by weight, which can be determined, for example, by Karl-Fischer titration.

Electrolyte (C) further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In an embodiment of the present invention, batteries according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good cycling stability and a low capacity fading.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The invention is further illustrated by working examples.

I. Synthesis of cathode active materials

I.1 Synthesis of a precursor TM-OH.1

A stirred tank reactor was charged with an aqueous solution 49 g of ammonium sulfate per kg of water. The solution was tempered to 55°C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in a residence time of 8 hours. The transition metal solution contained the sulfates of Ni, Co and Mn at a molar ratio of 8.7:0.5:0.8 and a total transition metal concentration of 1.65 mol/kg. The aqueous sodium hydroxide solution contained 25 wt.% sodium hydroxide solution and 25 wt.% ammonia solution in a weight ratio of 6. The pH value was kept at 12 by the separate feed of an aqueous sodium hydroxide solution. Beginning with the commencement of all feeds, mother liquor was removed continuously. After 33 hours all feed flows were stopped. The mixed transition metal (TM) oxyhydroxide precursor TM-OH.1was obtained by filtration of the resulting suspension, washing with distilled water, drying at 120°C in air and sieving.

I.2 Synthesis of a base cathode active material, B-CAM.1

Step (a.1) The mixed transition metal oxyhydroxide precursor T-M-OH.1 was mixed with LiOH monohydrate with a Li/(Ni+Co+Mn) molar ratio of 1.03. The mixture was heated to 780°C and kept for 10 hours in a forced flow of a mixture of 100% oxygen. After cooling to ambient temperature the resultant powder was deagglomerated and sieved through a 45

μm mesh to obtain the electrode active material B-CAM 1.

At ambient temperature, an amount of 20 kg B-CAM.1 was slurried into 10 L of de-ionized water under stirring over a period of 5 min. The resultant slurry was transferred onto a filter press and pressurized using dry air to remove the water by filtration. The resultant filter cake obtained from was dried under dry air 120°C over a period of 5 hours to obtain electrode active material B-CAM 2.

D50 = 14.0 μm determined using the technique of laser diffraction in a Mastersizer 3000 instrument from Malvern Instruments. The Li and transition metal content were determined by ICP analytics. Residual moisture at 250 °C was determined to be below 300 ppm.

II. Synthesis of inventive and of comparative cathode active materials

II.1 Synthesis of CAM.1

0.40 g of boric acid and 0.07 g of calcium oxide was added to 70 g B-CAM.2 under homogenization with a mixer, followed by a thermal treatment at 300°C for 2 hours in a forced flow of oxygen and sieved through a 45 μm mesh. Inventive cathode active material CAM.1 was obtained.

II.2 Synthesis of CAM.2

0.46 g of boric acid and 0.21 g of calcium oxide was added to 80 g B-CAM.2 under homogenization with a mixer, followed by a thermal treatment at 300°C for 2 hours in a forced flow of oxygen and sieved through a 45 μm mesh. Inventive cathode active material CAM.2 was obtained.

II.3 Synthesis of CAM.3

0.46 g of boric acid and 0.42 g of calcium oxide was added to 80 g B-CAM.2 under homogenization with a mixer, followed by a thermal treatment at 300°C for 2 hours in a forced flow of oxygen and sieved through a 45 μm mesh. Inventive cathode active material CAM.3 was obtained.

II.4 Synthesis of CAM.4

0.40 g of boric acid and 0.05 g of magnesium oxide was added to 70 g B-CAM.2 under homogenization with a mixer, followed by a thermal treatment at 300°C for 2 hours in a forced flow of oxygen and sieved through a 45 μm mesh. Inventive cathode active material CAM.4 was obtained.

II.5 Synthesis of CAM.5

0.46 g of boric acid and 0.15 g of magnesium oxide was added to 80 g B-CAM.2 under homogenization with a mixer, followed by a thermal treatment at 300°C for 2 hours in a forced flow of oxygen and sieved through a 45 μm mesh. Inventive cathode active material CAM.5 was obtained.

II.6 Synthesis of CAM.6

0.46 g of boric acid and 0.30 g of magnesium oxide was added to 80 g B-CAM.2 under homogenization with a mixer, followed by a thermal treatment at 300°C for 2 hours in a forced flow of oxygen and sieved through a 45 μm mesh. Inventive cathode active material CAM.6 was obtained.

II.7 Synthesis of CAM.7

0.40 g of boric acid and 0.19 g of barium oxide was added to 70 g B-CAM.2 under homogenization with a mixer, followed by a thermal treatment at 300°C for 2 hours in a forced flow of oxygen and sieved through a 45 μm mesh. Inventive cathode active material CAM.7 was obtained.

II.8 Synthesis of CAM.8

0.46 g of boric acid and 0.57 g of barium oxide was added to 80 g B-CAM.2 under homogenization with a mixer, followed by a thermal treatment at 300°C for 2 hours in a forced flow of oxygen and sieved through a 45 μm mesh. Inventive cathode active material CAM.8 was obtained.

II.9 Synthesis of CAM.9

0.46 g of boric acid and 1.14 g of barium oxide was added to 80 g B-CAM.2 under homogenization with a mixer, followed by a thermal treatment at 300°C for 2 hours in a forced flow of oxygen and sieved through a 45 μm mesh. Inventive cathode active material CAM.9 was obtained.

II.10 Synthesis of CAM.10

0.46 g of boric acid and 0.38 g of strontium oxide was added to 80 g B-CAM.2 under homogenization with a mixer, followed by a thermal treatment at 300°C for 2 hours in a forced flow of oxygen and sieved through a 45 μm mesh. Inventive cathode active material CAM.10 was obtained.

II.11 Synthesis of CAM.11

0.46 g of boric acid and 0.77 g of strontium oxide was added to 80 g B-CAM.2 under homogenization with a mixer, followed by a thermal treatment at 300°C for 2 hours in a forced flow of oxygen and sieved through a 45 μm mesh. Inventive cathode active material CAM.11 was obtained.

II.12 Synthesis of CAM.12

0.46 g of boric acid and 0.30 g of zinc oxide was added to 80 g B-CAM.2 under homogenization with a mixer, followed by a thermal treatment at 300°C for 2 hours in a forced flow of oxygen and sieved through a 45 μm mesh. Inventive cathode active material CAM.12 was obtained.

II.13 Synthesis of CAM.13

0.46 g of boric acid and 0.60 g of zinc oxide was added to 80 g B-CAM.2 under homogenization with a mixer, followed by a thermal treatment at 300°C for 2 hours in a forced flow of oxygen and sieved through a 45 μm mesh. Inventive cathode active material CAM.13 was obtained.

II.14 Synthesis of C-CAM.14

0.46 g of boric acid was added to 80 g B-CAM.2 under homogenization with a mixer, followed by a thermal treatment at 300°C for 2 hours in a forced flow of oxygen and sieved through a 45 μm mesh. Comparative cathode active material C-CAM.1 was obtained.

II.15 Synthesis of C-CAM.15

0.21 g of calcium oxide was added to 80 g B-CAM.2 under homogenization with a mixer, followed by a thermal treatment at 300°C for 2 hours in a forced flow of oxygen and sieved through a 45 μm mesh. Comparative cathode active material C-CAM.2 was obtained.

II.16 Synthesis of C-CAM.16

0.15 g of magnesium oxide was added to 80 g B-CAM.2 under homogenization with a mixer, followed by a thermal treatment at 300°C for 2 hours in a forced flow of oxygen and sieved through a 45 μm mesh. Comparative cathode active material C-CAM.3 was obtained.

II.17 Synthesis of C-CAM.17

0.57 g of barium oxide was added to 80 g B-CAM.2 under homogenization with a mixer, followed by a thermal treatment at 300°C for 2 hours in a forced flow of oxygen and sieved through a 45 μm mesh. Comparative cathode active material C-CAM.4 was obtained.

II.18 Synthesis of C-CAM.18

0.38 g of strontium oxide was added to 80 g B-CAM.2 under homogenization with a mixer, followed by a thermal treatment at 300°C for 2 hours in a forced flow of oxygen and sieved through a 45 μm mesh. Comparative cathode active

material C-CAM.5 was obtained.

II.19 Synthesis of C-CAM.19

0.30 g of zinc oxide was added to 80 g B-CAM.2 under homogenization with a mixer, followed by a thermal treatment at 300°C for 2 hours in a forced flow of oxygen and sieved through a 45 μm mesh. Comparative cathode active material C-CAM.6 was obtained.

III Testing of the cathode active material

III.1 Manufacture of electrodes

III.1.1 Manufacture of positive electrodes

PVDF binder (Solef® 5130) was dissolved in NMP (Merck) to produce a 7.5 wt.% solution. For electrode preparation, binder solution (3 wt.%), graphite (SFG6L, 2 wt.%), and carbon black (Su-per C65, 1 wt.-%) were suspended in NMP. After mixing using a planetary centrifugal mixer (ARE-250, Thinky Corp.; Japan), either any of inventive CAM.1 to CAM.13 or comparative cathode active materials (94 wt.%) was added and the suspension was mixed again to obtain a lump-free slurry. The solid content of the slurry was adjusted to 65%. The slurry was coated onto Al foil using a KTF-S roll-to-roll coater (Mathis AG). Prior to use, all electrodes were calendared. The thickness of cathode material was 70 μm, corresponding to 15 mg/cm2. All electrodes were dried at 105°C for 7 hours before battery assembly.

III.2 Manufacture of an electrolyte

A base electrolyte composition was prepared containing 12.7 wt% of $LiPF_6$, 26.2 wt% of ethylene carbonate (EC), and 61.1 wt% of ethyl methyl carbonate (EMC) (EL base 1), based on the total weight of EL base 1.

III.3 Manufacture of a test cell: coin-type half cells

Coin-type half cells (20 mm in diameter and 3.2 mm in thickness) comprising a cathode prepared as described under III.1.1 and lithium metal foil as working and counter electrode, respectively, were assembled upon injection of 0.15 mL of the electrolyte as described under III.2 and sealed in an Ar-filled glove box. The cathode, a separator, and the lithium metal foil were superposed, respectively, to produce a coin half cell.

IV Evaluation of cell performance

IV.1 Evaluation of coin-type half cell performance

Cell performance was evaluated using the coin-type cells as described in III.3.1. For the battery performance, initial capacity and Coulombic efficiency for initial performance, and cycling capacity retention at 25 °C and 45 °C and resistance growth for long term stability of the cells were measured.

IV.1.1 25 °C cycle performance

The 25 °C cycle performance was measured as follows:
Cells were tested in a voltage range between 4.3 V to 3.0 V at 25 °C, conducted in the CC-CV mode, i.e., a constant current (CC) of 0.5 C was applied until reaching 4.3 V, and retained at 4.3 V (CV) until reaching 0.01 C. After a 10 min resting period, discharge was carried out in the CC mode of 1 C to 3.0 V. The retention of the capacity was calculated by the ratio of the discharge capacity of the first cycle and the 100th cycle.

IV.1.2 45 °C cycle performance

The 45 °C cycle performance was measured as follows:
Cells were cycled in a voltage range between 4.25 V to 3.0 V at 45 °C, charging was conducted in the CC-CV mode, i.e., a constant current (CC) of 0.5 C was applied until reaching 4.25 V, and retained at 4.25 V (CV) until reaching 0.01 C. After a 10 min resting period, discharge was carried out in the CC mode of 0.5 C to 3.0 V. The retention of the capacity was calculated by the ratio of the discharge capacity of the first cycle and the 30th cycle. In parallel, the increase of the cell resistance during the cycling was monitored from the initial drop of the cell voltage during the discharge.

Table 1: Results of 45°C cycling capacity retention and 45°C cycling resistance growth

| CAM | B addition [mol%] | $M^3$ [mol-%] | 45 °C 30th Cycle Discharge Capacity Retention [%] |
|---|---|---|---|
| CAM.1 | 0.9 | Ca, 0.2 | 90.9 |
| CAM.2 | 0.9 | Ca, 0.5 | 91.0 |
| CAM.4 | 0.9 | Mg, 0.2 | 91.4 |
| CAM.8 | 0.9 | Ba, 0.5 | 91.9 |
| CAM.9 | 0.9 | Ba, 0.9 | 92.9 |
| CAM.10 | 0.9 | Sr, 0.5 | 90.0 |
| CAM.11 | 0.9 | Sr, 0.9 | 90.4 |
| CAM.12 | 0.9 | Zn, 0.5 | 91.6 |
| CAM.13 | 0.9 | Zn, 0.9 | 90.1 |
| C-CAM.1 | 0.9 | - | 89.6 |
| C-CAM.2 | - | Ca, 0.5 | 81.5 |
| C-CAM.3 | - | Mg, 0.5 | 82.3 |
| C-CAM.4 | - | Ba, 0.5 | 81.5 |
| C-CAM.5 | - | Sr, 0.5 | 83.4 |
| C-CAM.6 | - | Zn, 0.5 | 80.8 |

Table 2: Resistance growth measurement at 45°C/percentages

| CAM | 45 °C 30th Resistance Growth / % |
|---|---|
| CAM.1 | 219 |
| CAM.4 | 199 |
| CAM.5 | 214 |
| CAM.7 | 216 |
| CAM.8 | 181 |
| CAM.9 | 185 |
| CAM.10 | 222 |
| CAM.12 | 215 |
| CAM.13 | 215 |
| C-CAM.1 | 234 |
| C-CAM.2 | 225 |
| C-CAM.4 | 233 |
| C-CAM.6 | 229 |

## Claims

**1.** Process for the manufacture of coated cathode active materials comprising the steps of

(a) providing a particulate electrode active material according to general formula $Li_{1+x}TM_{1-x}O_2$ and x is in the range of from zero to 0.2 wherein TM is a combination of metals according to general formula (I),

$$(Ni_aCo_bMn_c)_{1-d}M_d \quad (I)$$

with

a being in the range of from 0.6 to 0.99,
b being zero or in the range of from 0.01 to 0.2,
c being in the range of from zero to 0.2, and
d being in the range of from zero to 0.1,
M is at least one of Al, Mg, Ti, Mo, W and Zr, and

$$a + b + c = 1,$$

(b) treating said particulate electrode active material with water, and subsequently removing the majority of the water by a solid-liquid separation method, thereby obtaining a solid residue,
(c) treating the solid residue from step (b) with a source of boron and with at least one compound of Mg, Ca, Sr, Ba, and Zn selected from the respective sulfates, oxides and hydroxides, thereby obtaining an intermediate,
(d) treating the intermediate obtained from step (c) thermally.

**2.** Process according to claim 1 wherein x is in the range of from zero to 0.05.

**3.** Process according to claim 1 or 2 wherein step (c) is performed in the absence of a solvent.

**4.** Process according to any of the preceding claims wherein said compound(s) of Mg, Ca, Sr, Ba, and Zn are selected from MgO, $Mg(OH)_2$, SrO, $Sr(OH)_2$, BaO, $Ba(OH)_2$, ZnO, $ZnSO_4$, and $Zn(OH)_2$.

**5.** Process according to any of the preceding claims wherein the source of boron is boric acid.

**6.** Process according to any of the preceding claims wherein the molar ratio of boron to compound(s) of Mg, Ca, Sr, Ba, and Zn is in the range of from 10:1 to 1:10.

**7.** Particulate electrode active material for a lithium ion battery wherein said material has a core based on a lithiated oxide according to general formula $Li_{1+x}TM_{1-x}O_2$ wherein x is in the range of from zero to 0.2 and wherein TM in formula $Li_{1+x}TM_{1-x}O_2$ is a combination of metals according to general formula (I)

$$(Ni_aCo_bMn_c)_{1-d}M_d \qquad (I)$$

with

a being in the range of from 0.6 to 0.99,
b being zero or in the range of from 0.01 to 0.2,
c being in the range of from zero to 0.2, and
d being in the range of from zero to 0.1,
M is at least one of Al, Mg, Ti, Mo, W and Zr, and

$$a + b + c = 1,$$

and an at least partial coating based on a compound of boron and at least one compound of Mg, Ca, Sr, Ba, and Zn.

**8.** Particulate electrode active material according to claim 7 wherein x is in the range of from zero to 0.05.

**9.** Particulate electrode active material according to claim 7 or 8 wherein said at least partial coating is predominantly located at the outer surface of the secondary particles.

**10.** Particulate electrode active material according to any of claims 7 to 9 wherein said at least partial coating is glassy or amorphous.

**11.** Particulate electrode active material according to claim 7 to 10 wherein said coating contains a glassy or amorphous oxide of lithium and boron.

**12.** Cathode comprising

(A) at least one particulate material according to any of the claims 7 to11,
(B) carbon in electrically conductive form, and
(C) a binder polymer.

**13.** Electrochemical cell comprising at least one cathode according to claim 12.

**Patentansprüche**

**1.** Verfahren zur Herstellung von beschichteten Kathodenmaterialien, umfassend die Schritte

(a) Bereitstellen eines aktiven Materials mit Partikelelektrode gemäß der allgemeinen Formel $Li_{1+x}TM_{1-x}O_2$, wobei x im Bereich von Null bis 0,2 liegt, wobei TM eine Kombination von Metallen gemäß der allgemeinen Formel (I) ist,

$$(Ni_aCo_bMn_c)_{1-d}M_d \qquad (I)$$

mit

a im Bereich von 0,6 bis 0,99 liegt,
b Null ist oder im Bereich von 0,01 bis 0,2 liegt,
c im Bereich von Null bis 0,2 liegt und
d im Bereich von Null bis 0,1 liegt,
M mindestens eines von Al, Mg, Ti, Mo, W und Zr ist und

$$a + b + c = 1,$$

(b) Behandeln des aktiven Materials der Partikelelektrode mit Wasser und anschließendes Entfernen des größten Teils des Wassers durch ein Fest-Flüssig-Trennverfahren, wodurch ein fester Rückstand erhalten wird,
(c) Behandlung des festen Rückstands aus Schritt b) mit einer Borquelle und mit mindestens einer Verbindung aus Mg, Ca, Sr, Ba und Zn, ausgewählt aus den jeweiligen Sulfaten, Oxiden und Hydroxiden, wodurch ein Zwischenprodukt erhalten wird,
(d) das aus Schritt c erhaltene Zwischenprodukt thermisch zu behandeln.

**2.** Verfahren nach Anspruch 1, wobei x im Bereich von Null bis 0,05 liegt.

**3.** Verfahren nach Anspruch 1 oder 2, wobei der Schritt c in Abwesenheit eines Lösungsmittels durchgeführt wird.

**4.** Verfahren nach einem der vorhergehenden Ansprüche, wobei die Verbindung(en) von Mg, Ca, Sr, Ba und Zn ausgewählt sind aus MgO, $Mg(OH)_2$, SrO, $Sr(OH)_2$, BaO, $Ba(OH)_2$, ZnO, $ZnSO_4$ und $Zn(OH)_2$.

**5.** Verfahren nach einem der vorhergehenden Ansprüche, wobei die Quelle von Bor Borsäure ist.

**6.** Verfahren nach einem der vorhergehenden Ansprüche, wobei das molare Verhältnis von Bor zu Verbindung(en) von Mg, Ca, Sr, Ba und Zn im Bereich von 10:1 bis 1:10 liegt.

**7.** Partikuläres Elektroden-Aktivmaterial für eine Lithium-Ionen-Batterie, wobei das Material einen Kern auf der Basis eines lithiierten Oxids gemäß der allgemeinen Formel $Li_{1+x}TM_{1-x}O_2$ aufweist, wobei x im Bereich von Null bis 0,2 liegt und wobei TM in der Formel $Li_{1+x}TM_{1-x}O_2$ eine Kombination von Metallen gemäß der allgemeinen Formel (I) ist

$$(Ni_aCo_bMn_c)_{1-d}M_d \qquad (I)$$

mit

a im Bereich von 0,6 bis 0,99 ist,
b Null ist oder im Bereich von 0,01 bis 0,2 liegt,
c im Bereich von Null bis 0,2 liegt und

d im Bereich von Null bis 0,1 liegt,
M mindestens eines von Al, Mg, Ti, Mo, W und Zr ist und

$$a + b + c = 1,$$

und eine zumindest partielle Beschichtung auf der Basis einer Verbindung von Bor und mindestens einer Verbindung von Mg, Ca, Sr, Ba und Zn.

**8.** Partikuläres Elektroden-Aktivmaterial nach Anspruch 7, wobei x im Bereich von Null bis 0,05 liegt.

**9.** Partikuläres Elektroden-Aktivmaterial nach Anspruch 7 oder 8, wobei die zumindest partielle Beschichtung überwiegend an der Außenfläche der Sekundärpartikel angeordnet ist.

**10.** Partikuläres Elektroden-Aktivmaterial nach einem der Ansprüche 7 bis 9, wobei die zumindest partielle Beschichtung glasig oder amorph ist.

**11.** Partikuläres Elektroden-Aktivmaterial nach Anspruch 7 bis 10, wobei die Beschichtung ein glasartiges oder amorphes Oxid aus Lithium und Bor enthält.

**12.** Kathode enthaltend

(A) mindestens ein Partikelmaterial nach einem der Ansprüche 7 bis 11,
(B) Kohlenstoff in elektrisch leitfähiger Form und
(C) ein Bindemittelpolymer.

**13.** Elektrochemische Zelle mit mindestens einer Kathode nach Anspruch 12.

**Revendications**

**1.** Procédé de fabrication de matériaux actifs de cathode revêtus comprenant les étapes

(a) fournissant un matériau actif d'électrode particulaire selon la formule générale Li1+xTM1-xO2 et x est compris entre zéro et 0,2 où TM est une combinaison de métaux selon la formule générale (I),

$$(Ni_aCo_bMn_c)_{1-d}M_d \qquad (I)$$

avec

a étant compris entre 0,6 et 0,99,
b étant nulle ou comprise entre 0,01 et 0,2,
c étant compris entre zéro et 0,2, et
d étant dans la gamme de zéro à 0,1,
M est au moins l'une des valeurs suivantes : Al, Mg, Ti, Mo, W et Zr, et

$$a + b + c = 1,$$

(b) traiter ledit matériau actif d'électrode particulaire avec de l'eau, puis éliminer la majorité de l'eau par une méthode de séparation solide-liquide, obtenant ainsi un résidu solide,
(c) le traitement du résidu solide de l'étape (b) avec une source de bore et avec au moins un composé de Mg, Ca, Sr, Ba et Zn choisi parmi les sulfates, oxydes et hydroxydes respectifs, obtenant ainsi un intermédiaire,
(d) Traitement thermique de l'intermédiaire obtenu à l'étape (c).

**2.** Procédé selon la revendication 1, dans lequel x est compris entre zéro et 0,05.

**3.** Procédé selon la revendication 1 ou 2, dans lequel l'étape (c) est réalisée en l'absence d'un solvant.

4. Procédé selon l'une quelconque des revendications précédentes, dans lequel lesdits composés de Mg, Ca, Sr, Ba et Zn sont choisis parmi MgO, $Mg(OH)_2$, SrO, $Sr(OH)_2$, BaO, $Ba(OH)_2$, ZnO, $ZnSO_4$ et $Zn(OH)_2$.

5. Procédé selon l'une quelconque des revendications précédentes, dans lequel la source de bore est l'acide borique.

6. Procédé selon l'une quelconque des revendications précédentes, dans lequel le rapport molaire du bore au (x) composé(s) de Mg, Ca, Sr, Ba et Zn est compris entre 10:1 et 1:10.

7. Matériau actif d'électrode particulaire pour une batterie au lithium-ion, dans lequel ledit matériau a un noyau basé sur un oxyde lithié selon la formule générale Li1+xTM1-xO2, dans lequel x est dans la plage de zéro à 0,2 et dans lequel TM dans la formule Li1+xTM1-xO2 est une combinaison de métaux selon la formule générale (I)

$$(Ni_aCo_bMn_c)_{1-d}M_d \qquad (I)$$

avec

a étant compris entre 0,6 et 0,99,
b étant nulle ou comprise entre 0,01 et 0,2,
c étant compris entre zéro et 0,2, et
d étant dans la gamme de zéro à 0,1,
M est au moins l'une des valeurs suivantes : Al, Mg, Ti, Mo, W et Zr, et

$$a + b + c = 1,$$

et un revêtement au moins partiel à base d'un composé de bore et d'au moins un composé de Mg, Ca, Sr, Ba et Zn.

8. Matériau actif d'électrode particulaire selon la revendication 7, dans lequel x est compris entre zéro et 0,05.

9. Matériau actif d'électrode particulaire selon la revendication 7 ou 8, dans lequel ledit revêtement au moins partiel est principalement situé à la surface externe des particules secondaires.

10. Matériau actif d'électrode particulaire selon l'une quelconque des revendications 7 à 9, dans lequel ledit revêtement au moins partiel est vitreux ou amorphe.

11. Matériau actif d'électrode particulaire selon les revendications 7 à 10, dans lequel ledit revêtement contient un oxyde vitreux ou amorphe de lithium et de bore.

12. Cathode comprenant

(A) au moins une matière particulaire selon l'une quelconque des revendications 7 à 11,
(B) carbone sous forme conductrice d'électricité, et
(C) un polymère liant.

13. Pile électrochimique comportant au moins une cathode selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8993051 B
- EP 3902037 A1
- JP 4789066 B
- JP 5139024 B
- US 20150372300 A